# EUROPEAN PATENT APPLICATION

(11) **EP 2 502 982 A1**
(43) Date of publication of application: **26.09.2012**
(21) Application number: 11159197.0
(22) Date of filing: 22.03.2011
(51) Int. Cl.: C12M 1/30, G01N 1/38

(54) **Device for recovery of a collected specimen**

(71) Applicant: Qiagen GmbH, 40724 Hilden (DE)
(72) Inventor: Himmelreich, Ralf, 40764, Langenfeld (DE)
(74) Representative: Gille Hrabal

(57) **Abstract**

The present invention relates to preparation of specimen or samples for analysis or diagnosis, and more particularly, to a device and method for recovery of a specimen/sample from a collecting material.

The recovery device includes a collection device and a drive mechanism operatively coupled to the collection device. The collection device may carry out a rotary and/or translatory motion due to the drive mechanism. The drive mechanism enables the release of the collected specimen by rotating and/or moving the collection device in a translatory motion whereby the collected specimen is released from the collection device, preferably into a receptacle.

## Description

The present invention relates to preparation of specimen or samples for analysis or diagnosis, and more particularly, to a device and method for recovery of a specimen/sample from a collecting material.

Methods and apparatuses are known for collecting and obtaining specimen, particularly for diagnostic and scientific examinations in biology and medicine. The range of collected specimen include samples of bacteria, viruses and DNA/RNA which for example can be taken from a cavity (oral, nasal, ocular, rectal, vaginal etc.) of a person. Generally, such samples are taken by means of swabs with cotton, fibre or polyester pads and the obtained specimen are transferred and released to a liquid for subsequent analysis or diagnosis. The transfer of the collected specimen, for example contained in an absorbent head of a swab, to a liquid can be implemented by mechanical (vortex, ultrasound) or chemical means. Document US 4,789,639 discloses a liquid recovery device which transfers a sample to a liquid by wringing a cotton swab on a pad.

However, depending on the collected amount of specimen, the type of specimen, the utilized liquid solution and the chosen recovery method (manual or automatic), the transfer and recovery of the specimen, particularly of the substance of interest, can be adversely affected. In order to improve the quality and sensitivity of subsequent analysis it is advantageous to enhance the recovery of collected specimen and thereby increase the concentration of the specimen to be analyzed. Furthermore, it is of interest to have a simple and standardized method and device for transferring and releasing collected specimen into a liquid for analysis, thus enhancing the overall reproducibility.

An object of this invention is to provide an improved device and method for collecting and recovering specimen for analysis or diagnosis.

The objects and advantages of this invention are achieved by a device and method according to the subject matter of the independent claims. In accordance with claim 1, the device includes a collection device and a drive mechanism operatively coupled to the collection device. The collection device is adapted to carry out a rotary and/or translatory motion by means of the operatively coupled drive mechanism.

The present invention allows an easier and standardized recovery of most of the collected specimen which otherwise would be retained by the collection device. The drive mechanism enables the release of the collected specimen by rotating and/or moving the collection device in a translatory motion whereby the collected specimen is released from the collection device, preferably into a receptacle. This enables the direct transfer of a collected specimen into a receptacle for analysis improving the preparation procedure and reducing contamination risks. The integrity of the recovered sample can thus be enhanced leading to more accurate analysis of the collected specimen. In particular, the recovery device is useful for recovering and transferring a specimen without requiring additional equipment. After transfer of the specimen, the recovery device along with the collection device can be safely disposed of.

The preferred collection device comprises an absorbent head or tip for collecting a specimen, for example in form of a cotton, fibre or polyester pad and a stem or shaft for easily handling the collection device. The collection device may be provided as a swab which is readily available and a standardized means for collecting a specimen or sample.

The drive mechanism for rotatory and/or translatory motion of the collection device may be constructed for mechanical actuation. This allows a simple arrangement without the need for electric power. The drive mechanism may reciprocate the collection device to enable the release of the collected specimen. A reciprocating stroke may consist of a forward and subsequent backwards movement of the collection device. Additionally, alternatively, the collection device may be rotated preferably concurrent with the reciprocating movement to accomplish a release effect. Preferably, the drive mechanism carries out a defined stroke and/or revolution of the collection device when actuated. The defined stroke and/or revolution of the collection device enables the release of the collected specimen in a standardized manner, thereby enhancing reproducibility. The preferred manual actuation is implemented by a push button operatively coupled to the drive mechanism. The push button facilitates the easy usage of the recovery device, especially with only one hand.

In general use, first a specimen is obtained with the collection device, preferably with the absorbent head of the collection device. To recover the collected specimen from the collection device, the drive mechanism operatively coupled to the collection device is actuated whereby the collection device carries out a rotatory and/or translatory motion. The collected specimen in the collection device is released by said motion and preferably received in a receptacle which may be utilized for downstream processing and analysis. The receptacle may be a usual sorbent tube containing an appropriate liquid like a universal transport medium (UTM; Copan Inc. Italy), a culture medium or a nutrient medium. Preferably, the liquid comprises a lysis buffer which may be PCR compatible or chaotropic. After recovery of the collected specimen the collection device along with the recovery device can be disposed of in a safe and sanitary manner.

In an embodiment of this invention, the collection device, particularly the stem of the collection device, is removably attached to the drive mechanism. The removable attachment may be implemented by a fastening means such as a screw thread or a push fit fitting. In use, the collection device can be removed from the drive mechanism to collect a specimen with the collection device. Afterwards, the collection device is reattached to the drive mechanism for further processing. By removably attaching the collection device to the drive mechanism the process of collecting a specimen is improved. Further, an easy disposal of the used collection device is enabled, allowing a fast replacement of the collection device.

In another embodiment of this invention, the recovery device further comprises a housing for enclosing the collection device. The housing improves the protection of the collection device and a collected specimen. After collecting a specimen with the collection device and inserting the collection device into the housing, the collected specimen can be safely transported and handled. Additionally, alternatively, the housing may comprise a cap or cover. Preferably, the cap or cover is provided adjacent to the absorbent head of the collection device. The cap may be arranged to enclose the absorbent head of the collection device. Alternatively, the cap may be provided adjacent to the absorbent head. In this manner, the cap can be easily removed to allow a collection of a specimen or a release of the collected specimen. In use, a specimen may be taken after removing the cap. The collected specimen can then be handled and transported with the reattached cover. Afterwards, to release the collected specimen the cover can be removed allowing the release of the collected specimen, for example into a receptacle. The cap or cover further prevents contamination by hermetically sealing the collection device in the housing. In addition, by providing the cap or cover adjacent to the absorbent head of the collection device the collection of specimen is also facilitated.

In an embodiment of this invention, the recovery device further comprises a holder for the collection device which can be removably attached to the housing. The holder may comprise the collection device in a fixed manner and may be attached on one end of the housing. To enable the removable attachment, the holder may feature a fastening means such as a screw thread or a push fit fitting. In use, the holder along with the collection is removed from the housing to collect a specimen with the collection device. Then, the holder is reattached to the housing for storage, transport and eventually for release of the collected specimen. The holder for the collection device enables easy specimen collecting by removing the collection device from the housing. Furthermore, the holder and the collection device can be manufactured as disposable parts allowing a safe and sanitary disposal.

In another embodiment of this invention, the collection device is fixed to the drive mechanism. The collection device and the drive mechanism may be constructed as fixed parts or integrated components. The collection device fixed to the drive mechanism may be constructed as a disposable component, thereby enabling a safe and sanitary disposal of the used collection device, preferably along with the used recovery device.

In an advantageous embodiment of this invention, a contact surface for releasing the collected specimen is provided. The contact surface may be arranged in the housing enclosing the collection device. By actuating the drive mechanism the collection device is manipulated and brought into contact with the contact surface. The contact surface causes the collection device, especially the absorbent head, to be wiped off thereby releasing the collected specimen.

The contact surface is preferably provided in a housing which encloses the collection device. The contact surface may be located adjacent to the absorbent head of the collection device. By providing the contact surface in a housing the transfer and recovery of a collected specimen can be accomplished in a protected manner. Further, the housing prevents contamination of the specimen during recovery and also during storage or transport of a collected specimen. By providing the contact surface adjacent to the absorbent head of the collection device the drive mechanism and the respective stroke for releasing the collected specimen can be optimized. It is thereby possible to release the collected specimen with a short and efficient stroke of the drive mechanism.

The contact surface may be implemented by at least one sheet or plate aligned to release the collected specimen from the collection device. A sheet or plate may be formed to generate a circumferential contact between contact surface and absorbent head when the drive mechanism is actuated. A sheet or plate allows the transfer of a collected specimen by a simple wiping effect. A generally circumferential contact between contact surface and absorbent head optimizes the contact area thereby improving the release of a collected specimen.

In another embodiment of this invention, the contact surface is implemented as a structured surface. The structured surface may comprise channels, grooves or recesses in the surface. Preferably, the recesses are aligned perpendicular to the axis of the collection device to increase the release effect. The structured surface may be formed with a changing gap in between. The gap of the structured surface may be adapted to the dimensions of the absorbent head. Thus, a close contact between the structured surface and the absorbent head is accomplished further improving the release and wipe-off effect. The structured surface may be manufactured from a flexible material such as silicone thereby improving the wipe-off effect of the contact surface.

In another embodiment of this invention, the contact surface is implemented as a lamellar structure. A lamellar structure may comprise several structural elements formed for wiping off. The wiping elements are preferably made from a flexible material such as silicone to enable a flexible wipe-off effect. The edges of the wiping elements generating the contact to the absorbent head are preferably rounded. The rounded edges of the lamellar structure guarantee that the absorbent head of the collection device is not damaged by the wiping elements. Alternatively, the edge of the wiping elements may feature a sharper edge to facilitate a stronger wipe-off effect, e.g. by scraping.

Preferably, the contact surface is manufactured by injection moulding. The injection moulding facilitates an easy-to-fabricate contact surface. In addition, the housing may also be formed by injection moulding. It is further advantageous to form housing and/or contact surface by 2-shot injection moulding thereby enabling a fast manufacturing of the contact surface in conjunction with the housing.

In some embodiments, according to this invention, the contact surface may be provided in form of an insertion member, particularly an inner sleeve or cartridge. The insertion member may be removably fixed to the housing to allow a replacement. Preferably, the insertion member is arranged at the end of the housing enclosing the absorbent head of the collection device. The insertion member thus enables an easy removal and replacement of the insertion element along with the contact surface.

In another aspect of this invention, the drive mechanism is driven by a motor such as a battery-powered or line-powered motor. The motor enables a convenient release of the collected specimen without manual actuation. Alternatively, the drive mechanism may comprise a coupling means for coupling a motor to the drive mechanism of the collection device. The coupling of the drive mechanism may be implemented by a sleeve, muff, clamp or flange coupling. By providing a coupling means the drive mechanism can be easily connected to a separate motor. The drive mechanism and the collection device may be constructed as a disposable part. After recovery of the collected specimen the used collection device with the drive mechanism may be disposed of, thus enabling a sanitary disposal of the used collection device. Additionally, alternatively, the drive mechanism may comprise a transmission means for connecting a separate motor to the drive mechanism of the collection device. The transmission means may be implemented by a gearbox or clutch. By providing a transmission means the drive mechanism can be driven by a separate motor in a flexible manner. The transmission allows the transformation of speed and torque thereby enabling an efficient actuation of the drive mechanism with the coupled collection device.

In accordance with an embodiment of this invention, a recovery device with a collection device and a housing comprising a cap or cover is provided. The cap is removably attached to the housing. The cap is preferably arranged adjacent to the absorbent head of the collection device.

This embodiment is particularly useful and advantageously employed when the collection of a specimen and the recovery of the specimen are carried out separately, for example, in different locations. The cap can easily be removed to collect a specimen. The cap mounted on the housing and enclosing the absorbent head ensures the safe storage, transport and handling of a collected specimen. Afterwards, the collected specimen can be easily recovered by removing the cap from the housing. Preferably, the recovery of the specimen utilizes a contact surface according to the above described embodiments.

The cap or cover may contain a fastening means such as a screw thread or a push fit fitting to enable a removable attachment to the housing. In this manner, the cap can easily be removed for collecting a specimen or releasing the collected specimen, for example into a receiving receptacle. In addition, the cap may comprise sealing means such as a sealing element or rubber gasket, for hermetically sealing the collected specimen inside the housing. The sealing means guarantees a safe handling and transport of the collected specimen reducing the risk of desiccation and contamination.

In accordance with an embodiment of this invention, a recovery device with a collection device and a drive mechanism is provided, wherein the drive mechanism further comprises a motor. Additionally, alternatively, said drive mechanism may be operatively coupled to a motor. The motor is preferably supplied by a battery or a power supply.

This embodiment allows easier recovery of most of the collected specimen which otherwise would be retained, for example by an absorbent head of the collection device. The rotation by a motor enables a faster and efficient release and recovery of the collected specimen in a standardized manner. The recovered specimen can for example be directly received in a receptacle. The integrity of the recovered sample can thus be improved leading to more accurate analysis of the collected specimen. In particular, the recovery device is useful for recovering and transferring a specimen without requiring additional equipment. The specimen may be directly transferred to a receptacle for further analysis. After transfer of the specimen, the collection device may be removed from the recovery device thereby enabling a safe and sanitary disposal of the used collection device.

In common use, the collection device and preferably a stem of the collection device is removably fixed to the drive mechanism. The drive mechanism may be operatively coupled to a motor. The attached collection device may already contain a collected specimen or such a specimen may be taken using the collection device. After the specimen has been collected, the collection device and particularly the absorbent head containing the collected specimen is immersed in a receptacle which may further contain a liquid suspension. The motor coupled to the drive mechanism may be actuated by a switch thereby rotating the collection device. In this manner, the collected specimen is released from the absorbent head and transferred for example into a receptacle. Afterwards the collection device may be removed or ejected from the drive mechanism holding the collection device to allow a safe and sanitary disposal.

Preferably, the motor is supplied by a battery which may be arranged in a housing along with the motor. Additionally, alternatively the motor may be line-powered by a common power socket. The battery enables a portable usage of the recovery device facilitating a ubiquitous application without requiring additional test apparatuses. In addition, the possibility to connect the recovery device to a common power socket enables easy recharging of the batteries and the stationary usage of the device.

In another embodiment of this invention, the motor is adapted for vibrating. The preferred motor may be a vibration motor combining rotation and vibration. Alternatively, the motor may be adapted to implement either manipulation separately. The vibration causes the collection device along with the absorbent head to shake and vibrate correspondingly, thereby improving the release of the collected specimen from the collection device.

In one embodiment of the invention, a control circuit is provided to control the operation of the motor. The control circuit may control the speed, rotation, torque and/or time of the motor operation. A user may for example set a desired operation time for releasing the specimen from the collection device whereby the motor is controlled accordingly. The operation of the motor in a standardized and controlled manner facilitates a precise control of the recovery and transfer procedure. Additionally, and/or alternatively, an adjustable electronic for the motor may be provided to control speed, rotation, torque and/or time of the motor. This also enables the operation of the motor in a controlled manner thus enabling a standardized transfer procedure. Furthermore, the reproducibility of the release/recovery process can be enhanced by the motor controller and/or the adjustable electronic.

In an advantageous embodiment of this invention, a release mechanism for ejecting the collection device is provided. The release mechanism may be actuated mechanically by a button or lever. The collection device may be fixed to the drive mechanism or a holder of the drive mechanism. The release mechanism enables the ejection of the collection device without the need to handle the collection device directly. After transfer of the collected specimen, a user may actuate the release mechanism which ejects the used collection device from the drive mechanism or respectively a holder of the drive mechanism. As the collection device does not need to be handled during its release, a safe and sanitary disposal is enabled.

In a preferred embodiment of this invention, the recovery device comprises a protective cover. The preferred protective cover may be provided at an end of the housing or on the collection device. The protective cover may be formed as part of the housing or may be installed separately. The protective cover provides protection for the user, for example against back splash, while transferring the collected specimen. Conversely, the receptacle receiving the specimen can also be protected from contamination during the recovery procedure.

In a further aspect of the invention, a receptacle for receiving the collected specimen is provided. The preferred receptacle may contain a liquid suspension. The liquid suspension may be adapted for the storage and/or transport of the collected specimen, for example a universal transport medium (UTM). Additionally, alternatively, the liquid suspension may be a culture or nutrient medium which can support the growth of microorganisms or cells. The use of a liquid suspension generally improves the release of the collected specimen. In addition, depending on the utilized suspension the transport, storage and/or growth of certain microorganisms/cells can be enhanced, particularly during the release of the collected specimen. By combining any of the effects of the utilized suspension with the recovery process, the overall process steps can also be reduced.

In a preferred embodiment of the invention, the liquid suspension is a lysis buffer which may be PCR compatible or chaotropic. The lysis buffer may be chosen depending on the analysis for which the lysate will be used for. By providing a lysis buffer in the receptacle receiving the collected specimen it is possible to carry out the recovery of the collected specimen concurrently with the lysis of the specimen. The drive mechanism and/or motor can be utilized to manipulate the collection device thereby enabling a centrifuge process. The recovery step and the centrifuge step can thus be combined reducing the overall process steps. The usage of a lysis buffer is particularly useful and advantageously employed in any system in which the sample has to be recovered and subsequently processed via lysis. A separate pipetting of the recovered specimen can be omitted and the lysis can be directly carried out for example in a receptacle, thereby enabling a fast sample processing and preparation for downstream analysis.

Other characteristics, advantages and potential applications of this invention are obvious from the description of further details and embodiments of this invention.

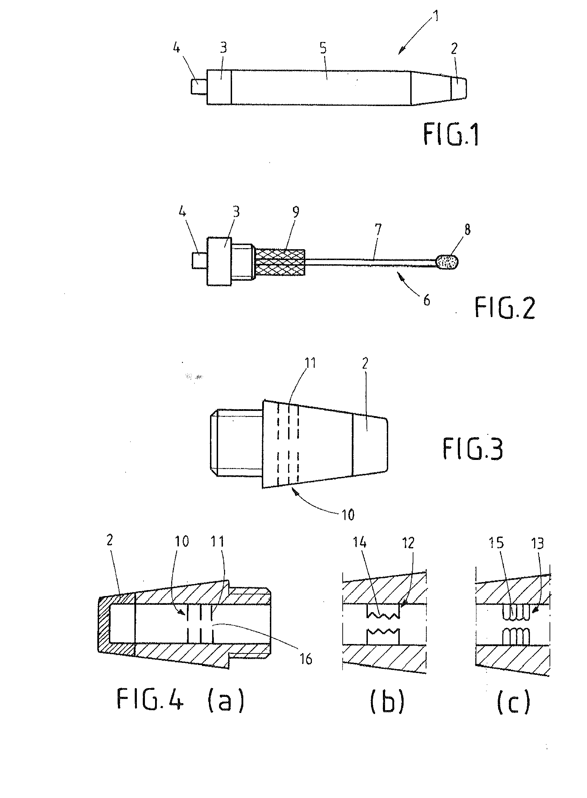

FIG. 1 is a schematic view of a recovery device 1 in accordance with one embodiment of the invention. The recovery device 1 comprises a housing 5 with a holder 3 and a push button 4 on one end and a cap 2 on the other end. FIG. 1 shows the recovery device 1 in its initial state before a specimen has been collected. The holder 3 is releasably attached to the housing 5 and can be removed for installing the collection device 6. Alternatively, the collection device 6 may be fixed to the holder 3. A specimen may be collected by removing the holder 3 with the collection device 6 from the housing 5 and absorbing a specimen with the absorbent head 8 of the collection device 6. After reattaching the holder 3 to the housing 5, the absorbent head 8 of the collection device 6 is located adjacent to the cap 2. The cap 2 may be provided to enclose the absorbent head 8 or the cap 2 may be situated near the absorbent head 8. After removing the cap 2, the absorbent head 8 is either directly accessible or located adjacent to the contact surface 10 used for release of the collected specimen. Thereby, the released specimen can easily be transported out of the housing 5, for example directly into a receptacle with a liquid suspension.
FIG. 2 is a schematic view of an illustrative holder 3 in accordance with one embodiment of the invention. The collection device 6 may be attached to the holder 3 via the stem 7. After collecting a specimen with the absorbent head 8 of the collection device, the stem 7 of the collection device 6 may be attached to the holder 3. Alternatively, the collection device 6 may be fixed to the holder 3 and a specimen may be collected using the holder 3. The holder 3 and the installed collection device 6 may then be reattached to the housing 5 by means of a screw threading or other suitable fastening means. As the housing 5 and the cap 2 entirely enclose the collection device 6 with the specimen, a secure storage and transport of the specimen is guaranteed. The holder further features a drive mechanism 9 operatively coupled to the collection device 6 for reciprocating and rotating the fixed collection device 6. The push button 4 provided at the holder 3 enables the actuation of the drive mechanism 9 to cause a defined stroke and rotation movement of the collection device 6.
FIG. 3 is a schematic view of an illustrative contact surface 10 in accordance with one embodiment of the invention. The contact surface 10 features a plurality of sheets 11 aligned perpendicular to the axis of the collection device 6. The sheets form a gap 16 in the middle. The contact surface 10 may be formed to establish a circumferential contact with the absorbent head 8. By actuating the drive mechanism 9 the absorbent head 8 is moved through the gap 16 of the contact surface 10. The gap 16 is sized to be smaller than the diameter of the absorbent head 8. Thereby, the edges 1 7 of the contact surface cause a wipe-off effect which releases the collected specimen from the absorbent head 8. Preferably, the sheets 11 are made of a flexible material to easily enable the absorbent head 8 to pass through the gap 1 7 forward and/or backwards.
   In order to recover and transfer the collected specimen, for example into a receptacle, the cap 2 may be removed revealing an opening. The recovery device 6 is preferably immersed in a receptacle with a liquid suspension. By depressing the push button 4, the drive mechanism 9 is actuated thereby causing a defined stroke movement of the collection device 6 in axial direction as well as a defined rotation around its axis. By the reciprocating movement of the collection device 6 the absorbent head 8 is brought into contact with the contact surface 10, particularly with the edges 1 7 of the contact surface. The released collected specimen is preferably directly transferred to the liquid suspension for further processing of the sample.
FIG. 4 is a cross-sectional view of different embodiments of the contact surface 10 in accordance with the invention. FIG. 4 (a) illustrates a contact surface formed by a plurality of flexible sheets 11. The sheets 11 preferably establish a circumferential contact with the absorbent head 8 to optimize the release of the collected specimen. FIG. 4 (b) shows a contact surface implemented by a structured surface 12. The structured surface 12 features recesses 14 to enhance the wipe-off effect. Additionally, the structured surface 1 2 may contain channels in axial direction to enable and improve the draining of the released specimen. FIG. 4 (c) illustrates a contact surface 1 0 formed by a lamellar structure 13. The lamellar structure 13 contains flexible wiping elements 15 with rounded edges at the end. The wiping elements 15 may be formed from a flexible material such as silicone. Generally, the gap 16 formed in the middle of the contact surface 10, the structured surface 1 2 or the lamellar structure 1 3 is sized to be smaller than the diameter of the absorbent head 8. At the same time, the gap 16 dimension allows the absorbent head 8 to pass through in a forward, backwards and/or rotating motion. The thus-obtained wipe-off effect releases the collected specimen from the absorbent head 8 allowing it to be transferred into a receptacle or other suitable means.

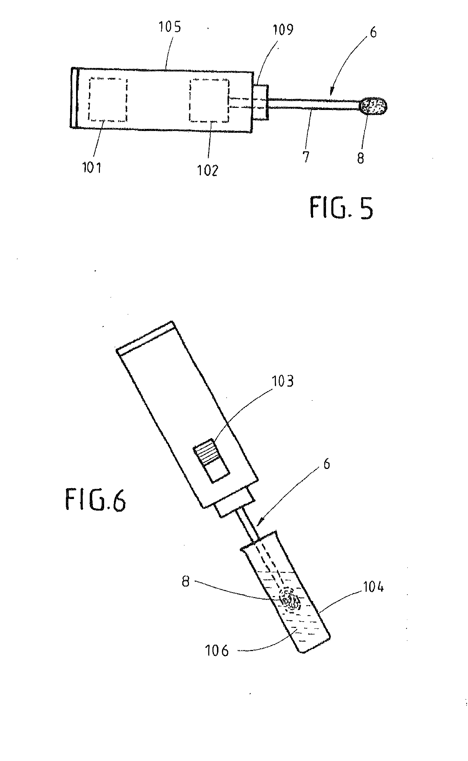

FIG. 5 is a schematic display of a recovery device in accordance with one embodiment of the invention. The recovery device includes a housing 105 in which a motor 102 and a battery 101 may be enclosed. The motor 102 is operatively coupled to the drive mechanism 109. On the drive mechanism 1 09 a collection device 6 may be removably attached and fixed. The collection device 6 includes a stem 7 which is attached to the drive mechanism 109 and an absorbent head 8 which is used for collecting a specimen. A user may collect a specimen with the absorbent head 8 and attach the collection device 6 to the drive mechanism 1 09 of the recovery device. To release the collected specimen from the absorbent head 8 the motor 1 02 is actuated, for example by a switch 1 03. The rotation of the collection device 6 causes the collected specimen to be released from the absorbent head 8.
FIG. 6 is a schematic view of the recovery device in conjunction with a receptacle 104 in accordance with one embodiment of the invention. The receptacle 104 contains a liquid suspension 106, for example to facilitate the recovery of the collected specimen. The absorbent head 8 may be immersed in the liquid suspension 106. The recovery process can be started by a switch 1 03 provided at the housing 105. Furthermore, a control circuit or an adjustable electronic may be provided to control the operation of the motor 102. A user may set a desired operation time or speed to control the recovery process, especially in a standardized manner. The preferred operation time of the motor is in the range of 5 to 30 seconds. After the set operation time has elapsed and most of the collected specimen has been recovered, the used collection device can be easily disposed of by using a release mechanism for ejecting the collection device 6. The release mechanism ejects the collection device 6 from the drive mechanism 109 allowing an easy disposal and replacement of the collection device 6.

## Claims

1. A device for recovery of a collected specimen, preferably a specimen of bacteria, viruses or DNA/RNA, comprising a collection device (6) for obtaining a specimen and a drive mechanism (9/109) operatively coupled to the collection device (6) for rotatory and/or translatory motion of the collection device (6).

2. A device according to the preceding claim, **characterised in that** said drive mechanism (9/1 09) is adapted to reciprocate the collection device (6) and/or rotate the collection device (6).

3. A device according to any of the preceding claims, **characterised in that** said drive mechanism (9/109) further comprises a motor (102) or said drive mechanism is further operatively coupled to a motor (102), whereby the motor is preferably adapted to be supplied by a battery (101) or a power supply.

4. A device according to the preceding claim, further comprising a control circuit and/or an adjustable electronic for said motor (102), particularly for controlling the speed, frequency and/or time of the motor operation.

5. A device according to one of the two preceding claims, **characterised in that** said motor (102) is adapted for vibrating.

6. A device according to any of the preceding claims, **characterised in that** said collection device (6) is removably attached to the drive mechanism (9/109).

7. A device according to any of the preceding claims, **characterised in that** said drive mechanism (9/109) comprises a release mechanism for ejecting the collection device (6).

8. A device comprising a collection device (6), preferably according to any of the preceding claims, comprising a housing (5/105) with a cap (2) whereby the cap (2) is removably mounted to cover the collection device (6), and the cap (2) is preferably provided adjacent to the absorbent head (8) of the collection device (6).

9. A device comprising a collection device (6), preferably according to any of the preceding claims, further comprising a contact surface (10) adapted to release the collected specimen from the collection device (6).

10. A device according to the preceding claim, comprising a drive mechanism (9/109) capable of generating a contact between the contact surface (10), preferably an edge (17) of the contact surface (10), and the collection device (6), preferably an absorbent head (8) of the collection device (6).

11. A device according to any of the two preceding claims, **characterised in that** said contact surface (10) consists of a structured surface (1 2) and/or a lamellar structure (13).

12. A device according to any of the preceding claims, **characterised in that** said collection device (6) comprises a stem (7) and/or an absorbent head (8), preferably made of cotton, fibre or polyester.

13. A device according to any of the preceding claims, further comprising a housing (5/105) for enclosing the collection device (6) and/or a protective cover for shielding the collection device (6) and/or a holder (3) removably attached to the housing (5/1 05) for fixing the collection device (6) within the housing (5/105).

14. A method for recovery of a collected specimen, comprising:
collecting a specimen with an absorbent head (8) of a collection device (6), releasing the collected specimen by at least one contact surface (10), preferably a structured surface (1 2) or lamellar structure (1 3), wherein the release is controlled by a drive mechanism (9/109).

15. A method for recovery of a collected specimen, comprising:
collecting a specimen with a collection device (6), attaching the collection device to a drive mechanism (9/109), immersing the collection device (6) in a receptacle (104) and transferring the collected specimen to the receptacle by actuating the drive mechanism (9/109), preferably by a motor (102).
